# EUROPEAN PATENT SPECIFICATION

(11) **EP 0 300 716 B1**
(45) Date of publication and mention of the grant of the patent: **19.05.1993**
(21) Application number: 88306552.6
(22) Date of filing: 18.07.1988
(51) Int. Cl.: C04B 35/10, C04B 35/48

(54) **Alumina-zirconia ceramic**
Aluminiumoxid-Zirkonoxid-Keramik
Céramique d'alumine-zircone

(30) Priority: 22.07.1987 US 76439
(43) Date of publication of application: 25.01.1989
(73) Proprietor: CHAMPION SPARK PLUG COMPANY, Toledo Ohio 43661-0001 (US)
(72) Inventor: Brog, Terrence K., Littleton Colorado 80123 (US); Manning, William R., Richmond Michigan 48062 (US)
(74) Representative: Freed, Arthur Woolf

(56) References cited:
- DE-A- 3 445 948
- US-A- 4 316 964

## Description

### DEFINITIONS

As used herein, and in the appended claims, the terms "percent" and "parts" refer to percent and parts by weight, unless otherwise indicated; g means gram or grams; cm means centimeter or centimeters; mm means millimeter or millimeters; ^{m}/ₒ means mole percent, and equals 100 times the number of moles of the constituent designated in a composition divided by the total number of moles in the composition; psi means pounds per square inch; and MPa means 10⁶ Pascals.

All temperatures herein are in degrees C., unless otherwise indicated.

### BACKGROUND OF THE INVENTION

### Field of the Invention

This invention relates to an alumina ceramic containing additions of zirconia and of yttria-stabilized zirconia; the ceramic can be one in which some of the particles of zirconia and yttria-stabilized zirconia are in the metastable tetragonal and some are in the monoclinic crystal structure.

### The Prior Art

Various alumina ceramics with additions of zirconia have been suggested. For example, U.S. patent No. 4,298,385, Claussen, discloses that additions of zirconia or hafnia to alumina increase the fracture toughness. It has been found, however, that, at high zirconia contents, it is difficult to retain a sufficient amount of the zirconia in the metastable tetragonal structure, and that the zirconia particles must be smaller than 0.5 µm.

Another U.S. Patent, No. 4,316,964, Lange, discloses alumina ceramics with additions of zirconia, which can be stabilized with one or more of Y₂O₃, CeO₂, La₂O₃, and Er₂O₃ for the purpose of stabilizing a reasonable amount of the zirconia in the metastable tetragonal symmetry.

Still another U.S. patent, No. 4,533,647, Tien, discloses modified alumina-zirconia composites. In one modification, chromia is present in solid solution in the alumina to increase the hardness and elastic modulus of the "matrix". In another modification, hafnia is used with the zirconia for the purpose of increasing the temperature at which the tetragonal to monoclinic transformation occurs, and, supposedly, as a consequence, to increase the fracture toughness, although it was found later that the increase in fracture toughness does not necessarily occur.

Further, U.S. patent No. 4,552,852, Manning, discloses alumina ceramics with zirconia or hafnia additions and a glass-phase. The material shows an improvement in thermal shock resistance.

Also, U.S. patent No. 4,587,225, Tsukuma, discloses composite ceramics of alumina and zirconia to which yttria additions have been made. The ceramic is produced by hot pressing, which enables the use of both lower temperatures and shorter times than would otherwise be required. This patent claims a high-strength material which is probably achieved, in part, as a consequence of the hot pressing.

A high strength metal working tool is disclosed by U.S.patent No. 4,666,467, Matsumoto et al. The tool is made from a sintered material comprising 50 to 98 percent of zirconia containing 1.5 to 5^{m}/ₒ of yttria and 50 to 2 percent of alumina or spinel.

A method for producing zirconia bodies partially stabilized with yttria and a secondary stabilizer is disclosed by U.S. patent No. 4,659,680, Guile. The method involves sintering a shaped batch, cooling the shape quickly to a temperature within the range of 1000° to 1475°, holding the shape at a temperature within the indicated range to cause precipitation of tetragonal ZrO₂ as islands within cubic ZrO₂ grains, and cooling to room temperature.

### SUMMARY OF THE INVENTION

According to the present invention, there is provided a method for producing a ceramic which consists essentially of formulating a batch composed of from 6 to 95 percent of particulate ZrO₂ and from 5 to 94 percent of particulate Al₂O₃ or of particulate Al₂O₃ containing up to 50m/oCr₂O₃ dissolved therein in solid solution, comminuting the batch, compacting the comminuted batch into a shape, firing the shape, and controlling the degree of comminution of the batch and the firing conditions to produce a dense, gas impervious ceramic characterised in that the batch is formulated from particulate Al₂O₃, particulate ZrO₂ in a tetragonal crystal structure as a consequence of an oxide dissolved therein to promote retention of the metastable tetragonal crystal structure and particulate ZrO₂ which has a monoclinic crystal structure, and the proportions of oxide and of tetragonal and monoclinic ZrO₂ in the batch are controlled so that the gas impervious ceramic contains both metastable tetragonal and monoclinic ZrO₂, and in such proportions that the ceramic has a strength, as indicated by the modulus of rupture, greater than that of the stronger of two otherwise identical ceramics, one wherein all of the ZrO₂ in the batch is in a metastable tetragonal and one wherein all of the ZrO₂ in the batch is in a monoclinic crystal structure.

Other oxides, particularly MgO, can be used to stabilize the tetragonal ZrO₂, but it is usually preferred that Y₂O₃ be used, and about the minimum amount that is required for stabilization. While approximately 9 percent of Y₂O₃ is required for complete stabilization of ZrO₂, it has been found that ZrO₂ stablized with as little as 5 percent of Y₂O₃ is significantly advantageous in a ceramic according to the invention. The particulates should have an ultimate particle size finer than 15 µm. In another embodiment, the ceramic consists essentially of from 6 to 95 percent of particulate ZrO₂, a part of which is in a metastable tetragonal crystal structure and a part of which has a monoclinic structure, as set forth above, from 5 to 94 percent of particulate Al₂O₃, and an amount of a sintering aid, e.g., 1 percent of MnO₂-TiO₂, sufficient to reduce significantly the firing temperature required to produce a dense, gas impervious ceramic from a pressed green body. The ceramic can also contain a glass which is a calcium magnesium silicate glass containing from 45 to 80 percent of SiO₂, from 8 to 55 percent of CaO and MgO, and not more than 15 percent of Al₂O₃. Preferably, the glass constitutes from 3 to 12 percent of the ceramic, most desirably from 5 to 12 percent.

In an embodiment of the invention, the batch may additionally contain from 1/4 to 3.3/4 percent each of MnO₂ and TiO₂.

Available data indicate that a large increase in strength as measured by the modulus of rupture is achieved when both ZrO₂ and metastable tetragonal ZrO₂ are present in an alumina ceramic; the increase is by comparison with the alumina ceramic with no ZrO₂ addition, by comparison with the alumina ceramic to which monoclinic ZrO₂ has been added, and, also, by comparison with the alumina ceramic to which yttria stabilized ZrO₂ has been added.

### DESCRIPTION OF THE PREFERRED EMBODIMENTS

The following examples are presented solely for the purpose of further illustrating and disclosing the invention. They are to be construed as illustrative, and not as limiting. Example 1 constitutes the best mode presently contemplated by the inventors.

### EXAMPLE 1

A ceramic batch composed of 79.2 parts of Al₂O₃, 10.4 parts of monoclinic ZrO₂, 10.4 parts of yttria 3^{m}/ₒ stabilized ZrO₂, 4 parts of a binder that is commercially available under the trade designation Mobilcer X and 0.4 part of a dispersant that is commercially available under the trade designation Darvan C was wet milled at 67 percent solids for one hour. The resulting batch was dried to a powder under an infra red lamp; the powder was then sieved. twice, first through a 20 mesh screen and then through a 60 mesh screen. The sieved batch was then pressed isostatically at 5000 psi. (about 35 MPa) around a cylindrical mandrel which had a diameter of about 4.8 mm, and the pressed shape was calcined at 871° for one hour; the calcined shape was rotated and ground by contact with a rotating grinding wheel to produce a stepped cylindrical blank with an internal bore which had a diameter of about 4.6 mm, a stem portion which had a length of about 59.9 cm and a diameter of about 9.2 mm, and a base portion which had a length of about 5.5 mm and a diameter of about 18.4 mm. The stepped cylindrical blank was placed on a setter and fired in a gas-fired tunnel kiln with a slightly reducing atmosphere; the firing cycle involved heating in about seventeen hours from 20° to 1550°, about 1½ hours at 1550° and cooling. The fired ceramic which resulted had an internal bore about 4 mm in diameter and an overall length of 57 mm; the stem portion had a length of 53 mm and an outside diameter of 6.6 mm, while the base portion had a length of 4 mm and an outside diameter of 14.3 mm. A batch of 12 ceramic pieces produced as described in this Example was found to have a modulus of rupture measured in three point loading of 78490±7410 psi (541±51 MPa).

The yttria-stabilized ZrO₂ used as described above in Example 1 is commercially available from Zirconia Sales, America, under the trade designation HSY-3. The material has a median particle size of about 0.8 µm; it consists of ZrO₂ plus 3 ^{m}/ₒ Y₂O₃, assay 99.3 percent, and incidental impurities.

The monoclinic ZrO₂ used as described above in Example 1 is commercially available from Zirconia Sales, America, under the trade designation DK-1. The material has a median particle size of about 1.0 µm; it consists of ZrO₂, assay 99.7 percent, and incidental impurities.

The Al₂O₃ used as described above in Example 1 is commercially available from Aluminum Company of America under the designation A39SG alumina. The material has a median ultimate particle size less than 1 micron; it consists of Al₂O₃, assay 99.9 percent, and incidental impurities.

The Mobilcer X binder used as described above in Example 1 is a microcrystalline wax emulsion commercially available from Mobil Oil Corporation under the indicated trade designation.

The Darvan C dispersant used as described above in Example 1 is an ammonium polyelectrolyte commercially available from R.T. Vanderbilt Company, Inc.

For purposes of comparison, but not in accordance with the instant invention, the procedure of Example 1 was repeated, except that, in one case, all of the ZrO₂ in the batch (20.8 parts) was yttria stabilized zirconia and, in another case, all of the ZrO₂ (20.8 parts) was monoclinic; the fired ceramics had a modulus of rupture of 70770±9730 psi (488±67 MPa) and 49840±6810 psi (344±47 MPa), respectively.

### Examples 2, 3 and 4

The procedure of Example 1 was repeated to produce ceramics according to the invention and control ceramic pieces, using alumina from different sources, as follows: "a", dry ball milled alumina that is available under the trade designation HPA from Arco Chemical Company; "b", alumina that is available under the trade designation RC-HP DBM from Reynolds International, Inc.; and "c", alumina that is available under the trade designation A16SG from Aluminum Company of America. The type of alumina, the parts of monoclinic zirconia, "ZrO₂m", the parts of yttria stabilized zirconia, "ZrO₂s", and the modulus of rupture of each of the ceramics produced are set forth in the following table:

| | Al₂O₃ | ZrO₂m | ZrO₂s | MOR, psi | MPa |
|---|---|---|---|---|---|
| Example 2 | a | 10.4 | 10.4 | 83240±10310 | 574±71 |
| Control "A" | a | 20.8 | --- | 40999±2290 | 283±16 |
| Control "B" | a | --- | 20.8 | 67181±5930 | 463±41 |
| Example 3 | b | 10.4 | 10.4 | 89634±6829 | 618±47 |
| Control "C" | b | 20.8 | --- | 46321±2651 | 319±18 |
| Control "D" | b | --- | 20.8 | 84830±6582 | 585±45 |
| Example 4 | c | 10.4 | 10.4 | 72241±9525 | 498±68 |
| Control "E" | c | 20.8 | --- | 38828±3164 | 268±22 |
| Control "F" | c | --- | 20.8 | 65866±8038 | 454±55 |

### Examples 5 and 6

The procedure of Example 1, except that Darvan 821A was used as a dispersant instead of the Darvan C, was also repeated to produce ceramics according to the invention and control ceramic pieces from batches composed of 20.0 parts of alumina b and 80 parts of monoclinic zirconia, stabilized zirconia, or a mixture of the two. Darvan 821-A is also an ammonium polyelectrolyte which is commercially available from R.T. Vanderbilt Company, Inc. The identity of the zirconia component of each batch and the modulus of rupture of each of the ceramics are set forth in the following table:

| | ZrO₂m | ZrO₂s | MOR, psi | MPa |
|---|---|---|---|---|
| Example 5 | 10 | 70 | 104492±10827 | 721±75 |
| Control "G" | -- | 80 | 97363±10827 | 672±75 |
| Example 6 | 20 | 60 | 116928±10827 | 807±75 |
| Control "H" | 30 | 50 | 24905±2247 | 172±15 |
| Control "I" | 40 | 40 | 33505±2815 | 231±19 |

### Examples 7 and 8

The procedures of Examples 5 and 6, except that the pressing pressure was 8000 psi (approximately 55 MPa), have been repeated to produce ceramic pieces according to the invention and control samples. The identity of the zirconia component of each batch and the modulus of rupture of each of the insulators are set forth in the following table:

| | ZrO₂m | ZrO₂s | MOR, psi | MPa |
|---|---|---|---|---|
| Example 7 | 10 | 70 | 112428±11361 | 776±78 |
| Control "J" | -- | 80 | 105770±8190 | 730±56 |
| Example 8 | 20 | 60 | 122775±9983 | 847±69 |
| Control "K" | 30 | 50 | 23854±2884 | 164±20 |
| Control "L" | 40 | 40 | 30138±2238 | 208±15 |

It will be appreciated from the data in the foregoing Examples that alumina ceramics made with some yttria stabilized zirconia and some monoclinic zirconia are unexpectedly advantageus, by comparison with otherwise identical ceramics made with yttria stabilized zirconia alone, or with monoclinic zirconia alone. It will also be appreciated from that data that comparatively small variations in the proportions of yttria stabilized zirconia and monoclinic zirconia cause drastic changes in the strength of the ceramics, as indicated by the modulus of rupture (compare, for example, the strengths of the ceramics of Examples 7 and 8 with those of the ceramics of Controls K and L). It has been found that the particle size of the batch and the firing conditions influence the proportions of metastable tetragonal and monoclinic zirconia at which optimum strength properties are achieved. Accordingly, if it is desired to practice the instant invention using a batch that is different from any of those identified above, or using different firing conditions, or both, it may be necessary to determine the proportions of metastable tetragonal and monoclinic zirconia at which the desired strengthening is achieved. This can be accomplished by preparing a series of batches analogous to those of Examples 7 and 8 and Controls J, K and L, producing ceramics, and determining their strength. It may then be desirable to prepare another series of batches where the proportions of yttria stabilized and monoclinic zirconia are intermediate those of the original series in the region where improved strength is indicated by the initial data. For example, with the batch ingredients and the firing conditions that were used for Examples 7 and 8 and for Controls J, K and L, maximum strengths were achieved with the batches which contained 10 and 20 parts of monoclinic zirconia and 70 and 60 parts of yttria stabilized zirconia; additional data for batches containing 5, 15 and 25 parts of monoclinic zirconia and 75, 65 and 55 parts of yttria stabilized zirconia should enable a reasonably close estimate of the optimum proportions of the two zirconias.

It is known that Cr₂O₃ forms solid solutions in Al₂O₃ in all proportions and that transformation toughened ceramics can be made from such solid solutions containing up to 50 ^{m}/ₒ of Cr₂O₃ and zirconia and from such solid solutions and solid solutions of hafnia in zirconia (see, for example, Tien, supra). It follows that the method of the instant invention can be used to produce ceramics of optimum strength from solid solutions of Cr₂O₃ in Al₂O₃. To illustrate, the procedure of Example 1 of Tien can be used to produce Al₂O₃-Cr₂O₃ ceramics having any desired Cr₂O₃ content up to 50 ^{m}/ₒ and containing any desired amount of ZrO₂ made up of varying proportions of monoclinic ZrO₂ and yttria stabilized ZrO₂. Modulus of rupture can then be determined as a function of the proportions of the two kinds of ZrO₂ ; additional ceramics can be made, if necessary, using different proportions, and ceramics having improved strength can then be made by a modification of the procedure of Tien Example 1 which involves using the requisite proportions of monoclinic ZrO₂ and yttra stabilized ZrO₂. Accordingly, generically, the batch that is comminuted as the first step in the method of the instant invention can be one composed of from 6 to 95 percent of particulate ZrO₂ and from 5 to 94 percent of particulate Al₂O₃ containing up to 50^{m}/ₒ Cr₂O₃ dissolved therein in solid solution, provided that, as stated above, a part of the particulate ZrO₂ is in a tetragonal crystal structure as a consequence of yttria or another oxide dissolved therein to promote retention of the metastable tetragonal crystal structure and a part has a monoclinic crystal structure.

The procedure of any of the Examples of Manning, supra, can also be modified to produce ceramics having improved strength, the modification involving merely using the requisite proportions of monoclinic ZrO₂ and stabilized ZrO₂, and the requisite proportions can be determined as described above, by varying the proportions and determining modulus of rupture as a function of proportions.

## Claims

1. A method for producing a ceramic which consists essentially of formulating a batch composed of from 6 to 95 percent of particulate ZrO₂ and from 5 to 94 percent of particulate Al₂O₃, or of particulate Al₂O₃ containing up to 50m/oCr₂O₃ dissolved therein in solid solution, comminuting the batch, compacting the comminuted batch into a shape, firing the shape, and controlling the degree of comminution of the batch and the firing conditions to produce a dense, gas impervious ceramic, characterised in that the batch is formulated from particulate Al₂O₃, particulate ZrO₂ in a tetragonal crystal structure as a consequence of an oxide dissolved therein to promote retention of the metastable tetragonal crystal structure and particulate ZrO₂ which has a monoclinic crystal structure, and the proportions of oxide and of tetragonal and monoclinic ZrO₂ in the batch are controlled so that the gas impervious ceramic contains both metastable tetragonal and monoclinic ZrO₂, and in such proportions that the ceramic has a strength, as indicated by the modulus of rupture, greater than that of the stronger of two otherwise identical ceramics, one wherein all of the ZrO₂ in the batch is in a metastable tetragonal and one wherein all of the ZrO₂ in the batch is in a monoclinic crystal structure.

2. A method as claimed in claim 1 wherein the batch additionally contains from 1/4 to 3.3/4 percent each of MnO₂ and TiO₂.

3. A method as claimed in claim 1 wherein the particulate Al₂O₃ is substantially free of dissolved Cr₂O₃.

## Patentansprüche

1. Ein Verfahren zur Herstellung von Keramik, das im wesentlichen darin besteht, einen Satz, der zu 6 bis 95 Prozent aus ZrO₂-Partikeln und zu 5 bis 94 Prozent aus Al₂O₃-Partikeln oder Al₂O₃-Partikeln mit bis zu 50 ^{m}/ₒ Cr₂O₃ besteht, das hier in einer festen Lösung enthalten ist, zusammenzustellen, diesen Satz feinzumahlen, den feingemahlenen Satz in eine Form zu pressen, die Form zu brennen, den Feinheitsgrad des Satzes und die Brennbedingungen zu kontrollieren, um eine dichte und gasundurchlässige Keramik zu erhalten, die sich dadurch kennzeichnet, daß der Satz aus Al₂O₃-Partikeln, ZrO₂-Partikeln mit tetragonaler Kristallstruktur infolge der Auflösung des Oxids besteht, um die Retention der metastabilen tetragonalen Kristallstruktur und der ZrO₂-Partikel mit monokliner Kristallstruktur zu fördern; die Proportionen des Oxids und des tetragonalen und monoklinen ZrO₂ im Satz werden kontrolliert, damit die gasundurchlässige Keramik sowohl metastabiles tetragonales als auch monoklines ZrO₂ enthält, und zwar in solchen Proportionen, daß die Keramik eine durch das Bruchmodul angegebene Festigkeit aufweist, die größer ist als die Festigkeit des stärksten von zwei ansonsten identischen Keramikprodukten, von denen in dem einen das gesamte ZrO₂ des Satzes eine metastabile tetragonale und in dem anderen das gesamte ZrO₂ des Satzes eine monokline Kristallstruktur aufweist.

2. Ein Verfahren gemäß Anspruch 1, bei dem der Satz zusätzlich zu je ¼ bis 3¾ Prozent aus MnO₂ und TiO₂ aufweist.

3. Ein Verfahren gemäß Anspruch 1, bei dem die Al₂O₃-Partikel im wesentlichen frei von aufgelöstem Cr₂O₃ sind.

## Revendications

1. Méthode de production d'une céramique qui consiste essentiellement dans le fait de mettre en formule une charge composée de 6 à 95 pourcent de ZrO₂ sous forme particulaire et de 5 à 94 pourcent de Al₂O₃ sous forme particulaire ou de Al₂O₃ sous forme particulaire contenant jusqu'à 50 m/o de C₂O₃ dissous dans celui-ci en solution solide, de pulvériser la charge, d'effectuer le compactage de la charge pulvérisée pour la mettre en forme, de cuire la forme et de contrôler le degré de pulvérisation de la charge et les conditions de la cuisson pour produire une céramique dense imperméable aux gaz, caractérisée par le fait que la charge est mise en formule au départ de Al₂O₃ sous forme particulaire, de ZrO₂ sous forme particulaire dans une structure cristalline tétragonale comme conséquence de la dissolution d'un oxyde dans celle-ci pour provoquer la rétention de la structure cristalline tétragonale métastable et le ZrO₂ sous forme particulaire qui a une structure cristalline monoclinique et les proportions d'oxyde et de ZrO₂ tétragonal et monoclinique dans la charge sont contrôlées de telle manière que la céramique imperméable aux gaz contienne à la fois du ZrO₂ tétragonal métastable et monoclinique et dans des proportions telles que la céramique ait une résistance, lorsqu'elle est indiquée par le module de rupture, plus forte que celle de la plus forte de deux cérmiques autrement identiques, l'une dans laquelle la totalité du ZrO₂ dans la charge est dans une forme tétragonale métastable et l'autre dans laquelle la totalité du ZrO₂ dans la charge est dans la forme d'une structure cristalline monoclinique.

2. Méthode telle que revendiquée dans la revendication 1, dans laquelle la charge contient en plus de 1/4 à 3.3/4 pourcent de chacun des MnO₂ et TiO₂.

3. Méthode telle que revendiquée dans la revendication 1, dans laquelle le Al₂O₃ sous forme particulaire est pratiquement dépourvu de Cr₂O₃ en solution.
